# EUROPEAN PATENT SPECIFICATION

(11) **EP 2 728 288 B1**
(45) Date of publication and mention of the grant of the patent: **06.07.2016**
(21) Application number: 12874843.1
(22) Date of filing: 05.10.2012
(51) Int. Cl.: F26B 3/12, F26B 21/00, F26B 23/06, B01D 1/18, B01D 1/22

(54) **SPRAY DRIER**
ZERSTÄUBUNGSTROCKNER
INSTALLATION DE SÉCHAGE PAR PULVÉRISATION

(30) Priority: 19.04.2012 KZ 20120462
(43) Date of publication of application: 07.05.2014
(73) Proprietor: Chomanov, Urishbay, Almaty 050004 (KZ)
(72) Inventor: CHOMANOV, Urishbay, Almaty, 050004 (KZ); TULTABAEVA, Tamara Chumanovna, Almaty, 050013 (KZ)
(74) Representative: Sloboshanin, Sergej
(86) International application number: PCT/KZ2012/000009
(87) International publication number: WO 2013/157908

(56) References cited:
- CN-Y- 201 311 172
- DE-C- 744 685
- FR-A1- 2 534 008
- SU-A1- 831 199
- SU-A1- 933 264
- SU-A1- 1 124 672
- US-A- 2 875 823

## Description

### FIELD OF THE ART

The invention relates to mechanical engineering, to the food and processing industry, and can also be used in other branches of industry where liquid products need to be dried.

### PRIOR ART

A continuously operating spray drier is known, the operative principle of which is the following: A liquid product is fed into a chamber of the drier through a spray disc; a drying agent moves in a flow parallel to the product; the dried product settles at the bottom of the chamber through an upper nozzle (A.G. Kasatkin: Basic processes and apparatus of chemical technology (*Osnovnye protsessy i apparaty khimicheskoy tekhnologii*), Izdatel stvo Khimiya, Moscow 1973, chapter XV, p. 622).

The basic shortcoming of said drier lies in its large dimensions and considerable energy consumption.

A pertinent prior art with respect to the proposed technical solution is a spray drier with a pneumatic centrifugal spraying device illustrated in Fig. 1 (KG Patent No. 705, March 2, 2004, ISSN 1029-2071).

In this spray drier a pneumatic-centrifugal spraying device is used for spraying the product, which is a fast-rotating disc formed as a vessel into which compressed air is fed under pressure through an orifice together with the product to be sprayed.

The basic shortcomings of this drier lie in the considerable metal content of the construction due to the large dimensions of the drier, the difficulty of achieving an evenness of the spraying, which reduces the quality of the manufactured products, and the high energy consumption as a consequence of the simultaneous feeding of the compressed air and the product to be sprayed into the spray orifice.

DE 744 685 discloses a spray drier according to the preamble of claim 1 and a method for producing dispersions and emulsions. The apparatus for spray drying comprises a rotating spraying disk wherein air streams are guided directly onto the spraying disk wherein the a quantity and a speed of the air streams are to be regulated. The apparatus comprises hoods which are movable and adjustable in their distance from the spraying disk.

### BRIEF DESCRIPTION OF THE DRAWINGS

The invention is described in detail below, with reference to the figures of the drawings.
- Fig. 1: schematically shows the spray drier with the pneumatic-centrifugal spraying device known from the prior art.
- Fig. 2: also schematically shows the spray drier according to the invention.

### DETAILED DESCRIPTION OF THE INVENTION

The task underlying the invention is the development of a spray drier with a rotating disc of conical or oval shape, which is heatable by a heated lower disc and a drying agent. The proposed construction of the spray drier ensures partial drying of the product to be dried as the product spreads over the surface of the rotating disc, and intensive mixing of the sprayed drops of the product with the drying agent, and also accelerates the process of final drying of the sprayed product. Furthermore the novel construction of the drier reduces the energy consumption, increases the quality of the manufactured articles and reduces the size of the drier by reducing the diameter of the spray jet.

The task underlying the invention is solved by using a rotating disc of conical or oval shape as the spraying device in the proposed spray drier, and rotating the disc by an electric motor.

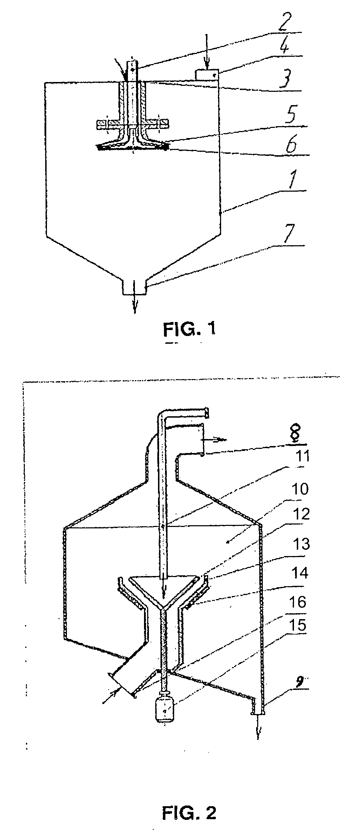

As shown in Fig. 1, the known spray drier with the pneumatic-centrifugal spraying device comprises a body 1, a shaft 2, a space 3 for water supply between the pipes, a nozzle 4 for supplying the drying agent, an orifice 5, a rotating disc 6, and a nozzle 7 for discharging the dried product and the drying agent.

In this spray drier the product spraying device is formed as a fast-rotating disc having the shape of a vessel into which compressed air is fed under pressure through an orifice together with the product to be sprayed. The drier has a large size and does not facilitate the achievement of an even spraying of the product to be dried, and as a consequence it does not make it possible to obtain a product of the desired quality.

Fig. 2 shows the spray drier according to the invention, comprising a chamber 10, a nozzle 11 for supplying the heated product, a rotating spray disc 12, an immobile disc 13 arranged under it, an electric tubular heater or heating element 14 attached to the outer side of the immobile disc 13 which is the reverse side with respect to the spray disc 12, an electric motor 15 for rotating the spray disc 12, a nozzle 16 for supplying the drying agent between the spray disc and the immobile disc, which forms an extension of the upper part of the drier, a nozzle 8 for discharging the water vapours, and a nozzle 9 connected to the bottom of the drier for discharging the dried product.

The spray drier according to the invention works as follows. The product to be dried is fed into the body 10 of the drier through the nozzle 11 and is supplied onto the rotating spray disc 12. Under the rotating disc 12 the immobile disc 13 is arranged that has the same configuration; the pre-heated drying agent is fed into the space between them through the nozzle 16. The immobile disc 13 arranged under is heated by the electric tubular heater 14 attached on its outer side facing away from the spray disc. The rotating disc 12 is heated through the heated disc 13 arranged underneath and also through the drying agent fed through the nozzle 16, and passes between the rotating and the immobile discs. Thus the heated liquid product is supplied onto the rotating disc 12, spreading and forming a thin film. Said film is pressed to the surface of the rotating disc 12 by the centrifugal force and is lifted upwards, wherein the product is partially dried. Having reached the end of the rotating disc 12, the partially dried product is evenly sprayed and is picked up by the outgoing heated drying agent fed directly into the spray zone. The feeding rate and the temperature of the drying agent facilitate an even spraying of the product to be dried and an intensive mixing of the sprayed drops of the product with the drying agent, which speeds up the drying process, reduces energy consumption and increases the quality of the manufactured product, a homogenous dry powder of the product. The drying agent, moving into the direction of the upper zone of the drying chamber, takes the sprayed drops of the product to be dried away with it, thus avoiding an increase of the diameter of the spraying jet and thus making it possible to reduce the diameter of the drier. In the upper part of the drier the further, full separation of the dried product from the water vapours takes place, and subsequently the completely dried product, a powder, settles on the bottom of the drier and is removed through the lower nozzle 9, while the water vapours exit through the upper nozzle 8 together with the heated air.

The use of the technical solution according to the invention makes it possible to improve the quality of the manufactured product, a dry powder of the product, reduce the energy consumption through homogenous spraying of the product, and reduce the size of the drier due to a reduction in the diameter of the spray jet.

The productivity of the drier can be enhanced by increasing the number of installed discs.

## Claims

1. Spray drier comprising a chamber (10), a nozzle (11) for feeding a drying agent, a rotating spray disc (12), a nozzle (9, 8) for discharging the dried product and the drying agent, the spray disc (12) having a conical or oval shape, an immobile disc (13) being arranged under the spray disc (12), wherein a space between said discs (12, 13) is provided for the passing of the drying agent to be used for partially drying the product to be dried, wherein it spreads on the surface of the rotating disc (12) and the sprayed drops of the product are intensively mixed with the drying agent,
**characterized in that**
on the outer side of the immobile disc (13) facing away from the spray disc (12) an electric tubular heater (14) is attached for directly heating the immobile disc (13) and indirectly heating the spray disc (12) through the immobile disc (13).

## Patentansprüche

1. Zerstäubungstrocknungsvorrichtung umfassend eine Kammer (10), eine Düse (11) zum Zuführen eines Trocknungsmittels, eine rotierende Zerstäuberscheibe (12), eine Düse (9, 8) zum Abführen des getrockneten Produkts und des Trocknungsmittels, wobei die Zerstäuberscheibe (12) eine konische oder ovale Form aufweist, wobei unter der Zerstäuberscheibe (12) eine unbewegliche Scheibe (13) angeordnet ist, wobei ein Raum zwischen den Scheiben (12, 13) zum Durchführen des Trocknungsmittels vorgesehen ist, das zum teilweisen Trocknen des zu trocknenden Produkts zu verwenden ist, wobei es sich an der Oberfläche der rotierenden Scheibe (12) ausbreitet und die zerstäubten Tropfen des Produkts intensiv mit dem Trocknungsmittel gemischt werden,
**dadurch gekennzeichnet, dass**
an der von der Zerstäuberscheibe (12) abgewandten Außenseite der unbeweglichen Scheibe (13) eine elektrische rohrförmige Heizeinrichtung (14) zum direkten Erwärmen der unbeweglichen Scheibe (13) und zum indirekten Erwärmen der Zerstäuberscheibe (12) durch die unbewegliche Scheibe (13) angebracht ist.

## Revendications

1. Sécheur pulvérisateur comprenant une chambre (10), une buse (11) destinée à l'alimentation d'un agent de séchage, un disque de pulvérisation (12) rotatif, une buse (9, 8) destinée à l'évacuation du produit séché et de l'agent de séchage, le disque de pulvérisation (12) étant de forme conique ou ovale, un disque fixe (13) agencé sous le disque de pulvérisation (12), un espace étant ménagé entre lesdits disques (12, 13) pour permettre le passage de l'agent de séchage utilisé pour sécher partiellement le produit à sécher, lequel produit se distribue à la surface du disque rotatif (12) et les gouttelettes pulvérisées du produit sont parfaitement mélangées à l'agent de séchage,
**caractérisé en ce qu'**un élément de chauffage électrique tubulaire (14) destiné au chauffage direct du disque fixe (13) et au chauffage indirect du disque de pulvérisation (12) à travers le disque fixe (13) est fixé sur le côté extérieur du disque fixe (13) éloigné du disque de pulvérisation (12).
